# FASCICULE DE BREVET EUROPEEN

(11) **EP 1 113 409 B1**
(45) Date de publication et mention de la délivrance du brevet: **20.06.2007**
(21) Numéro de dépôt: 00402709.0
(22) Date de dépôt: 02.10.2000
(51) Int. Cl.: G08G 1/0968, G01C 21/36

(54) **Système d'entrée d'informations dans différents équipements informatiques d'un véhicule automobile**
Dateneingabesystem für verschiedene Rechnergeräte in einem Kraftfahrzeug
Data entry system for different computing devices in a car

(30) Priorité: 02.11.1999 FR 9913680
(43) Date de publication de la demande: 04.07.2001
(73) Titulaire: Peugeot Citroen Automobiles SA, 92200 Neuilly sur Seine (FR)
(72) Inventeur: Fromion, Alexandre, 92160 Antony (FR)
(74) Mandataire: Habasque, Etienne J. Jean-François

(56) Documents cités:
- EP-A- 0 333 330
- FR-A- 2 726 382
- GB-A- 2 323 168
- US-A- 5 239 700
- US-A- 5 303 288
- US-A- 5 507 021
- US-A- 5 523 950
- PATENT ABSTRACTS OF JAPAN vol. 1999, no. 05, 31 mai 1999 (1999-05-31) & JP 11 053684 A (SUMITOMO WIRING SYST LTD), 26 février 1999 (1999-02-26)

## Description

La présente invention concerne un système d'entrée d'informations dans différents équipements informatiques d'un véhicule automobile équipé d'un téléphone embarqué.

Les véhicules automobiles intègrent de plus en plus d'équipements informatiques tels que par exemple des systèmes d'aide à la navigation ou des systèmes de messagerie.

Ces systèmes informatiques sont en général associés à des moyens d'entrée d'informations par un utilisateur, se présentant par exemple sous la forme d'un clavier associé à un afficheur de données.

On constate également que les véhicules sont de plus en plus souvent équipés de téléphones embarqués qui sont eux-mêmes munis de claviers alphanumériques d'entrée d'informations et d'afficheurs de données.

On conçoit alors que la multiplication de ces organes à bord des véhicules pose des problèmes d'implantation et d'utilisation.

Le but de l'invention est donc de résoudre ces problèmes.

A cet effet, l'invention a pour objet un système d'entrée d'informations dans différents équipements informatiques d'un véhicule automobile équipé d'un téléphone embarqué muni d'un clavier alphanumérique d'entrée d'informations et d'un afficheur, les équipements informatiques étant associés à des moyens d'entrée d'informations par un utilisateur, caractérisé en ce que les moyens d'entrée d'informations associés aux équipements informatiques sont formés par le clavier alphanumérique et l'afficheur du téléphone embarqué, auxquels sont associés des moyens d'analyse des informations entrées par l'utilisateur et de filtrage des informations potentiellement accessibles à travers ces moyens d'entrée, pour ne retenir que des informations sélectionnables après les informations déjà entrées par l'utilisateur, afin de faciliter l'entrée des informations par celui-ci.

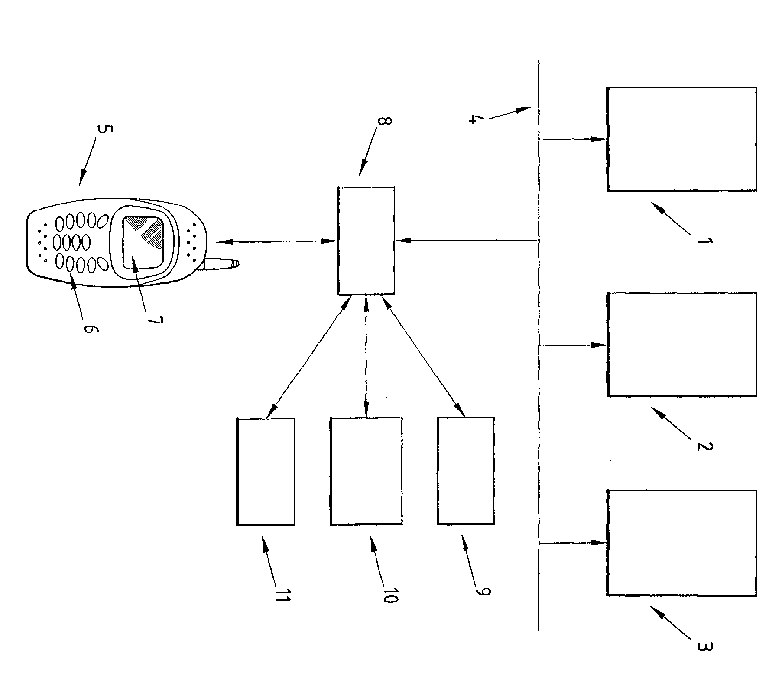

L'invention sera mieux comprise à la lecture de la description qui va suivre donnée uniquement à titre d'exemple et faite en se référant au dessin annexé qui représente un schéma synoptique illustrant la structure et le fonctionnement d'un système d'entrée d'informations selon l'invention.

On a en effet représenté sur cette figure, une architecture d'équipements électroniques et informatiques embarqués à bord d'un véhicule automobile.

Différents équipements de cette nature sont en effet embarqués à bord de celui-ci, ces équipements étant désignés par les références générales 1, 2 et 3 sur cette figure et comprenant par exemple un système d'aide à la navigation du véhicule, un système de messagerie, etc.

Ces différents équipements sont par exemple reliés par un réseau de transmission d'informations désigné par la référence 4.

De plus, le véhicule est équipé d'un téléphone embarqué désigné par la référence générale 5.

Ce téléphone comporte un clavier alphanumérique d'entrée d'informations désigné par la référence générale 6 et un afficheur désigné par la référence générale 7.

Selon l'invention, le clavier alphanumérique et l'afficheur du téléphone embarqué constituent les moyens d'entrée d'informations dans les équipements informatiques du véhicule.

En effet, ce clavier comporte notamment neuf touches de chiffres numérotées de 0 à 9 et deux touches de fonctions * et # et chaque touche de chiffres est également associée à un groupe de lettres normalisées de la façon suivante :
2/ABC
3/DEF
4/GHI
5/JKL
6/MNO
7/PQRS
8/TUV
9/WXZ
0/espace

Ces touches peuvent alors être utilisées pour entrer n'importe quelle information dans les équipements informatiques.

De plus et comme cela est illustré sur la figure, ces moyens sont associés à des moyens d'analyse des informations entrées par l'utilisateur et de filtrage des informations potentiellement accessibles à travers ces moyens d'entrée, pour ne retenir que des informations sélectionnables après les informations déjà entrées par l'utilisateur, afin de faciliter l'entrée des informations par celui-ci.

Ces moyens d'analyse et de filtrage sont désignés par la référence générale 8 sur cette figure et servent de passerelle entre le téléphone 5 et le réseau 4 auquel sont raccordés les équipements.

Ces moyens d'analyse et de filtrage peuvent comporter des moyens de sélection lexicographique d'informations, tels que ceux désignés par la référence générale 9 sur cette figure, des moyens de sélection statistique des informations, désignés par la référence générale 10 ou encore des moyens de sélection par tri dans une liste préétablie d'informations, tels que ceux désignés par la référence générale 11.

En effet, lorsque par exemple un utilisateur souhaite entrer des informations de points de départ et d'arrivée dans un système d'aide à la navigation, il peut être confronté à une recherche lexicographique d'informations.

Ceci signifie qu'après le choix de la première lettre d'un pays, d'une ville ou d'une voie, etc, la ou les autres lettres possibles du libellé qui suivent appartiennent à un ensemble restreint de caractères, ce qui réduit ou élimine alors l'ambiguïté entre l'appui sur la touche du clavier du téléphone et les lettres associées.

Dans le cas où plus de deux lettres sont encore possibles et sont associées à la même touche, des pressions successives sur cette touche permettent alors de sélectionner la lettre suivante (sélection cyclique).

Ce concept est illustré par l'exemple suivant de sélection de PARIS :
Etat de l'alphabet :
   A B C D E F G H I J K L M O P Q R S T U V W Y Z
   Appui sur la touche « 7 », puis « valide » Ville : P_
   A B C D E F G H I J K L M O P Q R S T U V W Y Z
   Appui sur la touche « 2 », puis «valide » Ville : PA_
   A B C D E F G H I J K L M O P Q R S T U V W Y Z
   Appui sur la touche « 7 », « 7 », « 7 » puis « valide » Ville : PAR_
   A B C D E F G H I J K L M O P Q R S T U V W Y Z
   Appui sur la touche « 4 » puis « valide » Ville: PARI_
   A B C D E F G H I J K L M O P Q R S T U V W Y Z
   Appui sur la touche « 7 » puis « valide » Ville : PARIS_
   A B C D EF G H I J K L M O P Q R S T U V W Y Z

La sélection lexicographique limite alors le nombre d'appuis sur les touches du clavier en filtrant l'alphabet au fur et à mesure de la recherche du libellé.

Ceci permet par exemple de réduire le temps de saisie des champs d'une adresse. Pour l'entrée des numéros de voies, on utilise directement le clavier numérique.

Lorsque par exemple l'utilisateur souhaite entrer dans un système de messagerie, un texte libre quelconque, l'ensemble des mots d'une langue est accessible.

Cependant, le système peut ne pas disposer d'un dictionnaire complet qui serait trop volumineux à stocker.

L'entrée du texte peut cependant être accélérée à partir du clavier du téléphone, en se basant sur des règles statistiques de fréquence de succession de lettres afin de proposer à l'utilisateur la lettre suivante la plus probable statistiquement (en séquence dans l'ordre des fréquences d'apparition dans la langue sélectionnée), dans le groupe de lettres associées à une touche.

L'exemple suivant permet de comprendre cette notion.

### Exemple : soit à taper le message « Bonjour »

En séquence d'appui, on a
**B** touche «2» ABC -> A puis B puis C
Pour atteindre « B », on appuie deux fois sur la touche 2
**O** touche « 6 » MNO -> O puis N puis M
Pour atteindre « O» , on appuie sur la touche 6
**N** touche « 6 » MNO -> M puis N
Pour atteindre « N » , on appuie deux fois sur la touche 6
**J** touche « 5 » JKL -> L puis J puis K
Pour atteindre « J » , on appuie deux fois sur la touche 5
**O** touche « 6 » MNO -> O puis N puis M
Pour atteindre « 0 », on appuie sur la touche 6
**U** touche « 8 » TUV -> U puis T puis V
Pour atteindre « U », on appuie sur la touche 8
**R** touche « 7 » PQRS -> S puis R puis P puis Q
Pour atteindre « R », on appuie deux fois sur la touche 7

Un accès rapide à une liste triée alphabétiquement peut également être envisagé.

Dans ce cas, le clavier du téléphone permet un accès presque direct au groupe de libellés pour la première lettre tapée.

En effet, la touche correspondant à la lettre choisie permet d'atteindre directement des libellés commençant par cette lettre. Des appuis successifs sur une touche correspondante permettent d'atteindre la lettre sélectionnée et selon le même principe que pour l'entrée d'informations des points de départ et d'arrivée décrite précédemment, les lettres pour lesquelles aucun libellé n'est présent dans la liste sont éliminées.

Ce principe peut être itératif en permettant ainsi la sélection d'un libellé unique.

### Exemple : soit à rechercher le libellé « Octave »

L'appui sur la touche **6/MNO** provoque le positionnement de l'index de liste sur le premier libellé de la liste commençant par M. Un deuxième appui sélectionne le premier libellé commençant par O, car dans cet exemple il n'existe pas de libellé commençant par N.

Après validation de la lettre, l'utilisateur appuie sur la touche **2/ABC** (pour sélectionner le C). Comme il n'existe pas de libellé commençant par OA, l'index se positionne sur le libellé commençant par OB, un deuxième appui sur la touche **2/ABC** positionne l'index sur le libellé « OCTAVE ».

Le libellé est atteint en 4 appuis, même si la liste contient plusieurs centaines de libellés.

On conçoit alors qu'un tel système permet de faciliter l'entrée d'informations par un utilisateur dans les différents équipements informatiques embarqués à bord d'un véhicule automobile et ce, en utilisant un clavier unique.

Par ailleurs, le volume de données à stocker est relativement faible dans la mesure où le codage et le stockage des tables des fréquences d'apparition des groupes de lettres, se basent sur des données statistiques de la langue sélectionnée et représentent un faible volume de données comparativement à celui d'un dictionnaire.

Ce système permet également de réduire le temps de saisie des informations pour des expressions régulières d'une langue.

En effet, le système tend à fournir à l'utilisateur au premier appui sur une touche, la lettre suivante la plus probable dans un mot courant.

De plus, ce système permet la saisie de séquences non régulières comme par exemple un nom propre ou n'appartenant pas à la langue sélectionnée. Le temps de saisie d'informations avec un tel système est donc en valeur moyenne, le même qu'avec un clavier standard, ce système constituant en fait un accélérateur de saisie et pouvant être très simplement inséré dans une interface homme-machine.

Bien entendu, d'autres modes de réalisation encore d'un tel système peuvent être envisagés.

## Revendications

1. Système d'entrée d'informations dans différents équipements informatiques (1,2,3) d'un véhicule équipé d'un téléphone embarqué (5) muni d'un clavier alphanumérique d'entrée d'informations (6) et d'un afficheur (7), les équipements informatiques étant associés à des moyens d'entrée d'informations par un utilisateur, **caractérisé en ce que** les moyens d'entrée d'informations associés aux équipements informatiques sont formés par le clavier alphanumérique (6) et l'afficheur (7) du téléphone embarqué, auxquels sont associés des moyens (8,9,10,11) d'analyse des informations entrées par l'utilisateur et de filtrage des informations potentiellement accessibles à travers ces moyens d'entrée, pour ne retenir que des informations sélectionnables après les informations déjà entrées par l'utilisateur, afin de faciliter l'entrée des informations par celui-ci.

2. Système selon la revendication 1, **caractérisé en ce que** les moyens d'analyse et de filtrage comprennent des moyens (8,9) de sélection lexicographique des informations sélectionnables.

3. Système selon la revendication 1, **caractérisé en ce que** les moyens d'analyse et de filtrage comprennent des moyens (8,10) de sélection statistique des informations sélectionnables.

4. Système selon la revendication 1, **caractérisé en ce que** les moyens d'analyse et de filtrage comprennent des moyens (8,11) de sélection par tri des informations dans une liste préétablie.

5. Système selon l'une quelconque des revendications précédentes, **caractérisé en ce que** les équipements informatiques comprennent un système d'aide à la navigation du véhicule.

6. Système selon l'une quelconque des revendications précédentes, **caractérisé en ce que** les éléments informatiques comprennent un système de messagerie.

## Claims

1. System for inputting information into various items of computer-based equipment (1, 2, 3) of a vehicle equipped with an onboard telephone (5) equipped with an alphanumeric keypad for inputting information (6) and a display (7), the items of computer-based equipment being associated with means enabling a user to input information, **characterised in that** the information inputting means associated with the items of computer-based equipment are formed by the alphanumeric keypad (6) and the display (7) of the onboard telephone, and with which means there are associated means (8, 9, 10, 11) for analysing information inputted by the user and for filtering information that is potentially accessible through these input means, in order to retain only information that can be selected after the information already inputted by the user, in order to facilitate the inputting of information by the user.

2. System according to Claim 1, **characterised in that** the analysis and filtering means include means (8, 9) for the lexicographical selection of selectable information.

3. System according to Claim 1, **characterised in that** the analysis and filtering means include means (8, 10) for the statistical selection of selectable information.

4. System according to Claim 1, **characterised in that** the analysis and filtering means include means (8, 11) of selection by sorting of information in a pre-established list.

5. System according to any one of the preceding claims, **characterised in that** the items of computer-based equipment include a vehicle navigation aid system.

6. System according to any one of the preceding claims, **characterised in that** the computer-based items include a messaging system.

## Patentansprüche

1. System zum Eingeben von Informationen in verschiedene Datenverarbeitungsgeräte (1, 2, 3) eines Fahrzeugs, das mit einem bordinternen Telephon (5) ausgerüstet ist, das mit einer alphanumerischen Tastatur (6) für die Eingabe von Informationen und mit einer Anzeigeeinrichtung (7) versehen ist, wobei den Datenverarbeitungsgeräten Mittel für die Eingabe von Informationen durch einen Anwender zugeordnet sind, **dadurch gekennzeichnet, dass** die Informationseingabemittel, die den Datenverarbeitungsgeräten zugeordnet sind, durch die alphanumerische Tastatur (6) und die Anzeigeeinrichtung (7) des bordinternen Telephons gebildet sind, denen Mittel (8, 9, 10, 11) zugeordnet sind, um von dem Anwender eingegebene Informationen zu analysieren und Informationen, auf die über diese Eingabemittel möglicherweise zugegriffen werden kann, zu filtern, um nur Informationen zu halten, die nach den vom Anwender bereits eingegebenen Informationen auswählbar sind, um die Eingabe von Informationen durch diesen zu erleichtern.

2. System nach Anspruch 1, **dadurch gekennzeichnet, dass** die Analyse- und Filterungsmittel Mittel (8, 9) für die lexikographische Auswahl von auswählbaren Informationen umfassen.

3. System nach Anspruch 1, **dadurch gekennzeichnet, dass** die Analyse- und Filterungsmittel Mittel (8, 10) für die statistische Auswahl von auswählbaren Informationen umfassen.

4. System nach Anspruch 1, **dadurch gekennzeichnet, dass** die Analyse- und Filterungsmittel Mittel (8, 11) für die Auswahl durch Sortieren der Informationen in einer im Voraus erstellten Liste umfassen.

5. System nach einem der vorhergehenden Ansprüche, **dadurch gekennzeichnet, dass** die Datenverarbeitungsgeräte ein System für die Unterstützung der Navigation des Fahrzeugs umfassen.

6. System nach einem der vorhergehenden Ansprüche, **dadurch gekennzeichnet, dass** die Datenverarbeitungselemente ein Kommunikationssystem umfassen.
